# EUROPÄISCHE PATENTSCHRIFT

(11) **EP 0 425 479 B1**
(45) Veröffentlichungstag und Bekanntmachung des Hinweises auf die Patenterteilung: **16.09.1998**
(21) Anmeldenummer: 91100798.7
(22) Anmeldetag: 18.10.1986
(51) Int. Cl.: H02P 6/14

(54) **Treiberschaltung für einen kollektorlosen Gleichstrommotor, insbesondere zum Antrieb eines Lüfters**
Driver circuit for a d.c.motor without collector, especially to drive a ventilator
Commande de moteur à courant continu sans collecteur, plus spécialement pour actionner un ventilateur

(30) Priorität: 21.10.1985 DE 3537403
(43) Veröffentlichungstag der Anmeldung: 02.05.1991
(62) Teilanmeldung aus: 86906266.1
(73) Patentinhaber: Papst Licensing GmbH, 78549 Spaichingen (DE)
(72) Erfinder: Müller, Rolf, Dr.-Ing., W-8000 München (DE)
(74) Vertreter: Patentanwälte Westphal, Buchner, Mussgnug Neunert, Göhring

(56) Entgegenhaltungen:
- DE-A- 2 616 044
- DE-A- 3 231 259
- FR-A- 2 316 780
- US-A- 3 769 555
- US-A- 4 393 339
- US-A- 4 535 275

## Beschreibung

Die Erfindung betrifft eine Treiberschaltung zur Leistungs- bzw. Drehzahlveränderung eines kollektorlosen Gleichstrommotors gemäß dem Oberbegriff des Anspruchs 1.

Eine solche Treiberschaltung ist bereits aus der DE-A-33 28 370 bekannt. Diese Schaltung arbeitet mit zwei Hallsensoren als Drehstellungsgeber, um zwei gegeneinander phasenverschobene Positionssignale zu erzeugen. Mittels eines Mikrocomputers werden aus den Ausgangssignalen der Rotorstellungssensoren rechteckförmige Steuerimpulse erzeugt, die in als Integrationsverstärker ausgebildeten Endstufen trapezförmige Ausgangsimpulse zur Ansteuerung der Motorwicklungen ableiten. Die dem Motor zugeführte Leistung wird dadurch variiert, daß die Vorderflanke der Impulse durch eine variable Verzögerung in ihrem Beginn verstellt wird, um zu verschieden langen Steuerimpulsen und damit Ausgangsimpulsen für die Wicklungen zu gelangen. Diese bekannte Schaltung weist nicht nur einen erheblichen Schaltungsaufwand auf, sondern benötigt auch zwei Hallsensoren zur Ableitung der Rotorpositionssignale.

Aus der DE-OS 31 07 623 ist eine Treiberschaltung bekannt und verfügt über ein RC-Glied, mit dessen Hilfe Rechtecksignale zum Steuern des Gleichstrommotors verformt werden, um die Flankensteilheit zu verringern, wodurch die Wicklungsgeräusche des Motors verringert werden. Bei der bekannten Treiberschaltung ist jedoch weder eine Möglichkeit zur Verstellung der Drehzahl noch eine Möglichkeit zur Regelung der Drehzahl in Abhängigkeit einer äußeren physikalischen Größe unabhängig von der Betriebsspannung möglich.

Es ist bekannt, die Stellung des Rotors mit mindestens einem galvanomagnetischen Element, einem Hall-Generator o.ä. zu detektieren und mit dem in diesem Element gewonnenen Signal, welches von der Rotorstellung abhängig ist, über Halbleiterelemente die Ströme in einer oder mehreren Statorwicklungen zu steuern.

Die hierbei benutzten Steuerschaltungen werden mit Gliedern ergänzt, welche in Abhängigkeit von äußeren, erfaßbaren physikalischen Größen die Drehzahl bei im übrigen konstanter Betriebsspannung regeln. Es kann sich um eine von verschiedenen Größen abhängig zu machende Drehzahlveränderung handeln oder um eine solche Nachregelung der Drehzahl eines Antriebsmotors für einen Lüfter, von dem eine Lüfterwirkung erwartet wird, die sich automatisch einem Luftstrombedarf anpaßt. In diesem Fall kann der Lüfter zu einem zu kühlenden Gerät gehören, das sich unterschiedlich erwärmt, und dessen Wärme von dem Lüfter abzuführen ist. In diesem Falle würde die abzuführende Wärme die externe physikalische Führungsgröße sein, welche die Drehzahlregelung bestimmt.

Nicht nur für diesen beispielhaft erwähnten Anwendungsfall, sondern allgemein geht das Bestreben der Anwender oder Hersteller derartiger Gleichstromantriebe dahin, möglichst kleine und raumsparende Motoren verfügbar zu machen. Die Verlustleistung soll klein gehalten werden.

Um die Leistung der mit konstanter Betriebsspannung betriebenen Motoren zu variieren, ist eine Pulsbreitenmodulation des Motorstroms bekannt. Hierbei wird eine niedrige, im Hörfrequenzbereich liegende Pulsfrequenz gewählt, welche zwar wenig zusätzliche Verlustleistung zur Folge hat und auf benachbarte Geräte wenig Störungen abstrahlt, aber der Nachteil liegt in einer erheblichen zusätzlichen Geräuschentwicklung. Deshalb ist es auch bekannt, die Pulsfrequenz zur Geräuschminderung hoch zu wählen. Dann entstehen Hochfrequenzstreufelder, welche die Geräte stören, in denen Lüfter mit dem entsprechenden Gleichstromantrieb zugeordnet werden. Die einfachste Regelung benutzt einen groben Ein- und Ausschaltbereich mit dem Nachteil eines unruhigen knurrenden Motorlaufes. Durch die Forderung nach kleiner Bauweise entsteht zusätzlich das Bestreben, die in den Schaltkreisen verwendeten Bauelemente zu integrieren und in einem Chip zusammenzufassen. Deshalb müssen auch in den verwendeten, integrierten aktiven und passiven Bauelementen die Verlustleistungen klein gehalten werden, um die Bauelemente eng beieinander zu fügen und zu kapseln. Diese Forderung widerstreitet mit der Notwendigkeit, für Spitzenbelastungen in den elektromagnetischen Antriebsspulen genügend Strom fließen zu lassen. In den Regelkreisen treten dann entsprechende Belastungsspitzen auf, die nicht zur Zerstörung der integrierten elektronischen Bauelemente führen dürfen.

Der Erfindung liegt im vorstehenden Sinne die Aufgabe zugrunde, eine Treiberschaltung für einen kollektorlosen Gleichstrommotor verfügbar zu machen, die bei geringem schaltungstechnischen Aufwand und konstanter Betriebsspannung eine Leistungs- bzw. Drehzahlveränderung ermöglicht, die geringe Leistungsverluste in den Bauelementen, insbesondere in den Endstufentransistoren verursacht und außerdem sowohl die zusätzlichen Motorgeräusche als auch die streuenden Hochfrequenzstörungen gering hält.

Insbesondere soll gemäß der Erfindung eine Treiberschaltung geschaffen werden, bei der die Zeitpunkte der Steuerimpulse für die Endstufen weitgehend unabhängig von der jeweiligen Motordrehzahl erzeugt werden, d.h., sie sollen an bestimmten Punkten innerhalb der Kommutierungsphase liegen.

Diese Aufgabe wird gemäß der vorliegenden Erfindung durch eine Treiberschaltung mit den Merkmalen des Anspruchs 1 gelöst.

Die Halbleiterelemente können zur Steuerung der Ströme für die Statorwicklung oder Statorwicklungen teilweise als analoge Verstärkerelemente arbeiten und nahe der maximalen möglichen Drehzahl als Schalter, um beispielsweise während einer Kommutierungsphase die Einschaltdauer zu verkürzen. In Ausgestaltung dieser Lösung lassen sich in der Schaltung rampenförmige Verläufe der Ströme über die Zeit erzeugen, entlang denen eine Variation der Schaltstellen stattfinden kann. Eine andere Lösungsmöglichkeit läßt sich mit einer Verzögerungsschaltung verwirklichen, die nach Maßgabe der äußeren Führungsgröße den vom Lagemelder vorgegebenen Einschaltzeitpunkt verzögert.

Insgesamt sollen in allen Bauelementen Verlustleistungen vermieden werden. Dadurch wird eine integrierbare Zusammenfassung der Bauelemente möglich. Die äußeren Bedingungen für die unterschiedlichen Betriebszustände werden zumindest durch ein Bauelement erfaßt. Es ist bekannt, temperaturempfindliche Bauelemente in einem Lüfterstrom zu verwenden, welche die Drehzahl oder die Leistung eines kollektorlosen Gleichstrommotors, der in Verbindung mit dem Lüfter eingesetzt ist, nachregeln. Dies erfolgt aber über eine direkte Leistungseinstellung der Endstufenhalbleiter. Obwohl hierbei keine zusätzlichen Hochfrequenzfelder entstehen, welche die zu belüftenden Geräte stören können und auch diese Regelung keine zusätzliche Geräuschentwicklung zur Folge hat, entwickelt sich im Teillastbereich eine erhebliche zusätzliche Verlustleistung, die mit einer Erwärmung der Halbleiterstrecken einhergeht. Diese Erwärmung steht einer Integrierung der Bauelemente im Wege. Die vorliegende Erfindung geht von der Erkenntnis aus, daß diese Motoren über lange Einschaltzeiten nur im Teillastbereich gefahren werden. Erfindungsgemäß wird deshalb der Motorstrom in diesem Bereich beispielsweise mit einer Pulsbreitenmodulation geregelt, deren Frequenz gleich der Kommutierfrequenz des Motors ist und bei der jeweils innerhalb einer Einschaltphase des angesteuerten Endstufenhalbleiters sowohl ein Schalterbetrieb als auch anschließend ein Analogbetrieb angewendet wird. Während dieses Analogbetriebes läßt sich der Motorstrom beispielsweise entlang einer in der Treiberschaltung erzeugten Rampenfunktion reduzieren.

Durch eine Kombination aus Schalterbetrieb und Analogbetrieb lassen sich vorzugsweise bei niedriger Drehzahl synchroner Schaltfrequenz überraschenderweise sowohl die Verluste in den Halbleiterstrecken als auch die elektromagnetischen und akustischen Störungen wesentlich reduzieren.

In weiterer Ausgestaltung des Erfindungsgedankens wird bei Teillastbetrieb der Einschaltzeitpunkt des Motorstroms gegenüber dem vom Lagemelder vorgegebenen Einschaltzeitpunkt verzögert. Dadurch tritt eine weitere überraschende Beruhigung des Motorlaufs auf. Hier wirken offensichtlich zwei Effekte. Die parasitäre axiale Krafterzeugung, die im Bereich der Kommutierung maximal ist, wird vermindert. Zum zweiten wird durch die nach dem theoretischen Kommutierzeitpunkt rasch ansteigende Gegen-EMK die Stromanstiegsgeschwindigkeit wesentlich reduziert, so daß trotz reinen Schalterbetriebs der Strom relativ langsam ansteigt.

Weitere Merkmale, Gesichtspunkte, Ausgestaltungen und Vorteile der Erfindung ergeben sich aus den Ansprüchen und der folgenden Beschreibung von in der Zeichnung dargestellten Ausführungsbeispielen.

Es zeigen:
- Fig. 1: ein Blockschaltbild zur Veranschaulichung der grundsätzlichen Funktion einer Treiberschaltung gemäß der Erfindung,
- Fig. 2: ein Blockschaltbild für ein erstes Ausführungsbeispiel der Treiberschaltung gemäß der Erfindung,
- Fig. 3: eine Schaltung für einen zweipulsigen, zweisträngigen, kollektorlosen Gleichstrommotor mit oder ohne Reluktanzmoment, bei dem die Drehzahl in Abhängigkeit von einer äußeren physikalischen Größe ohne eine innere Hilfsgröße geregelt wird,
- Fig. 4: eine gegenüber Fig. 3 hinsichtlich der Einleitung einer Regelspannung abgewandelten Ausführungsform,
- Fig. 5: ein Schaltungsbeispiel mit einer an den Statorspulen gewonnenen zusätzlichen Regelspannung,
- Fig. 6: eine gegenüber Fig. 5 abgewandelte Ausführungsform,
- Fig. 7: eine erste einfache Ausführungsform mit einem eingefügten Generator zur Erzeugung einer Rampenflanke,
- Fig. 8: eine abgewandelte Ausführungsform zur Erzeugung der Rampenflanke,
- Fig. 9: eine weiterhin abgewandelte Ausführungsform von Fig. 8 und
- Fig. 10: eine weiterhin abgewandelte Ausführungsform eines eingefügten Sägezahngenerators.

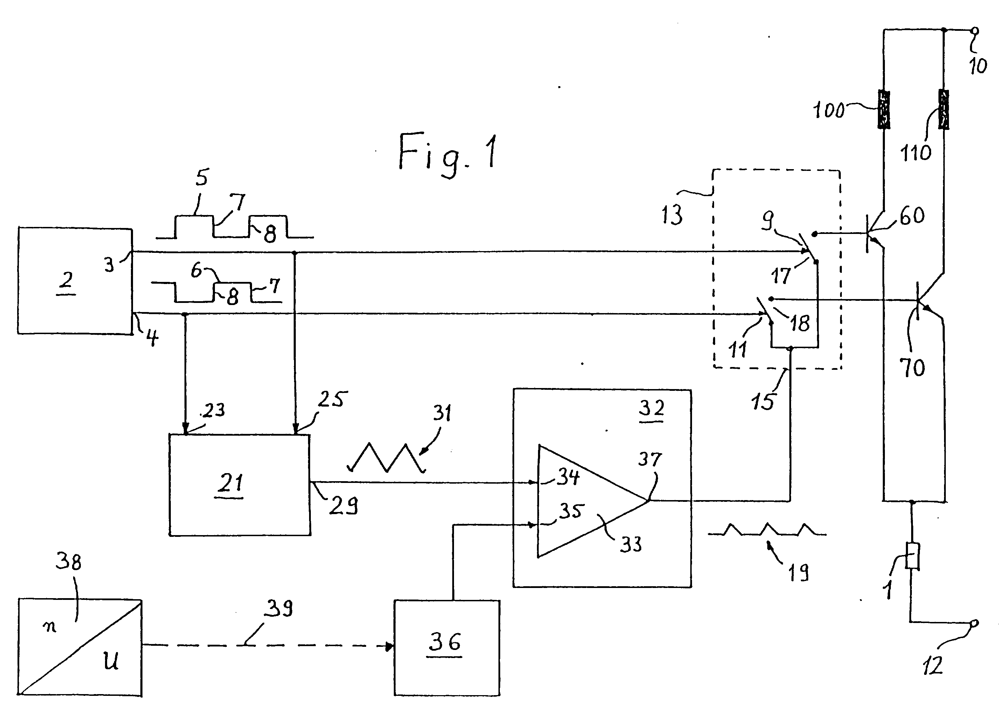

Das in Fig. 1 dargestellte Blockschaltbild zeigt eine Treiberschaltung für einen kollektorlosen Gleichstrommotor mit einer ersten Statorwicklung 100 und einer zweiten Statorwicklung 110. Die Statorwicklungen 100, 110 sind mit ihrem einen Wicklungsende an eine erste Anschlußklemme 10 zur Zuführung der Betriebsspannung des kollektorlosen Gleichstrommotors angeschlossen. Die erste Statorwicklung 100 liegt im Kollektorkreis eines Leistungstransistors 60 der Treiberschaltung, während die zweite Statorwicklung 110 im Kollektorkreis eines Leistungstransistors 70 liegt. Die Emitter der Leistungstransistoren 60, 70, die die Endstufe der Treiberschaltung bilden, sind über einen Gegenkopplungswiderstand 1 mit einer zweiten Anschlußklemme 12 für die Betriebsspannung verbunden. Durch abwechselndes periodisches Ansteuern der Leistungstransistoren 60, 70 werden abwechselnd durch die Statorwicklungen 100, 110 Magnetfelder erzeugt, die den permanentmagnetischen Rotor des kollektorlosen Gleichstrommotors in Drehung versetzen.

Die laufende Drehstellung des in der Zeichnung nicht dargestellten Rotors des Gleichstrommotors wird mit Hilfe einer Sensorschaltung 2 erfaßt, die beispielsweise ein Hallelement enthalten kann, dem ein Verstärker und Impulsformer zugeordnet sind. Entsprechend der Drehung des Rotors treten an den Ausgängen 3, 4 impulsförmige periodische um 180°ₑ₁ versetzte Sensorsignale 5, 6 auf. Die negativen Flanken 7 der impulsförmigen Sensorsignale 5 liegen zeitlich kurz vor den positiven Flanken 8 der impulsförmigen Sensorsignale 6. Entsprechend liegen die negativen Flanken 7 des Sensorsignales 6 zeitlich kurz vor den positiven Flanken 8 des Sensorsignals 5.

Wie man in Fig. 1 erkennt, steuern die periodischen Sensorsignale 5, 6 die Leistungstransistoren 60, 70 nicht unmittelbar, was bei üblichen Treiberschaltungen für kollektorlose Gleichstrommotoren der Fall ist.

Wie man in Fig. 1 erkennt, sind die Ausgänge 3, 4 der Sensorschaltung 2 mit Steuereingängen 9, 11 einer Verknüpfungsschaltung 13 verbunden. Die Verknüpfungsschaltung 13 gestattet es, ein am Eingang 15 der Verknüpfungsschaltung 13 anliegendes Endstufensteuersignal 19 in Abhängigkeit von den Signalen an den Steuereingängen 9, 11 wahlweise an die Basis des Leistungstransistors 60 oder die Basis des Leistungstransistors 70 zu legen. Durch die Verknüpfungsschaltung 13 wird für die Ansteuerung der Leistungstransistoren 60, 70 entsprechend den Kommutierungsperioden des Gleichstrommotors jeweils ein Zeitrahmen festgelegt, der durch die geschlossene Stellung der die Verknüpfungsschaltung 13 symbolisch darstellenden Schalter 17, 18 definiert ist. Wenn beispielsweise der Steuereingang 9 mit einer positiven Flanke des Sensorsignals 5 beaufschlagt wird, schließt der Schalter 17, so daß das am Eingang 15 der Verknüpfungsschaltung 13 anliegende Endstufensteuersignal 19 zur Basis des Leistungstransistors 60 gelangen kann. Wenn die negative Flanke auftritt, öffnet sich der Schalter 17 und das Endstufensteuersignal 19 ist von einer Einwirkung auf den Leistungstransistor 60 ausgeschlossen. Sobald jedoch über den Steuereingang 11 der Schalter 18 der Verknüpfungsschaltung 13 geschlossen wird, gelangt das Endstufensteuersignal 19 zum Leistungstransistor 70.

Die Treiberschaltung gemäß Fig. 1 ist so ausgelegt, daß die Impulse des ebenfalls impulsförmigen Endstufensteuersignals 19 in ihrer Dauer kleiner sind als die Impulse der Sensorsignale 5, 6. Auf diese Weise ist es möglich, die Ansteuerung der Leistungstransistoren 60, 70 jeweils nur innerhalb eines Teils des durch die Impulse der Sensorsignale 5, 6 vorgegebenen Zeitrahmens durchzuführen. Wenn die am Eingang 15 jeweils anliegenden Impulse gegenüber den an den Steuereingängen 9, 11 anliegenden Impulsen kürzer werden, verkleinern sich die Zeiten, während der durch die Leistungstransistoren 60, 70 und die Statorwicklungen 100, 110 Strom fließt. Die Impulslängen im Endstufensteuersignal 19 gestatten somit eine Beeinflussung des Drehmomentes und/oder der Drehzahl des kollektorlosen Gleichstrommotors. Außerdem kann die Signalform der Impulse des Endstufensteuersignals 19 so ausgelegt werden, daß die vorderen und/oder hinteren Flanken der durch die Statorwicklungen 100, 110 fließenden Ströme abgeflacht werden, so daß Motorgeräusche und Leistungsverluste in den Leistungstransistoren 60, 70 kleinstmöglich gehalten werden.

Zur Erzeugung des Endstufensteuersignals 19 ist gemäß dem in Fig. 1 dargestellten Blockschaltbild ein Rampengenerator 21 vorgesehen, der über zwei Steuereingänge 23, 25 mit den Ausgängen 3, 4 der Sensorschaltung 2 verbunden ist. Der Rampengenerator 21 ist beispielsweise ein Sägezahn- oder Dreieckspannungsgenerator, der an seinem Ausgang 29 eine Dreiecksspannung 31 zur Verfügung stellt, deren Frequenz gegenüber der Frequenz der Sensorsignale 5, 6 verdoppelt ist.

Zwischen dem Ausgang 29 des Rampengenerators 21 und dem Eingang 15 der Verknüpfungsschaltung 13 liegt ein Impulsbreitenformer 32. Der Impulsbreitenformer 32 enthält eine vergleichende Verstärkerschaltung, kurz Komparator 33 genannt, dem an einem ersten Eingang 34 die Dreiecks spannung und an einem zweiten Eingang 35 das Ausgangssignal eines Drehzahleinstellungsschaltkreises 36 zugeführt wird. Das Ausgangssignal des Drehzahleinstellungsschaltkreises 36 dient zur Vorgabe eines Schwellenwertes in der Weise, daß am Ausgang 37 immer dann ein Signal auftritt, wenn die Dreiecksspannung 31 oberhalb dem jeweils gesetzten Schwellenwert liegt. Auf diese Weise liefert der Ausgang 37 ein Endstufensteuersignal 19 mit Dreiecksspannungsimpulsen,. deren maximale Amplitude und deren Basislängen vom Signal am zweiten Eingang 35 des Komparators 33 abhängig sind. Wenn beispielsweise durch den Drehzahleinstellungsschaltkreis 36 ein kleinerer Schwellenwert gesetzt wird, nähern sich die Flanken des Endstufensteuersignals 19, indem die Impulsform des Endstufensteuersignals 19 sich der Impulsform der Dreiecksspannung 31 annähert, wobei die Basislänge der Impulse und die maximale Amplitude an den Dreiecksspannungsspitzen größer werden.

Wenn das Endstufensteuersignal 19 mit im größeren Abstand voneinander liegenden Dreiecksimpulsen zu den Leistungstransistoren 60, 70 gelangt, steigt der Strom durch die Statorwicklungen 100, 110 entsprechend den ansteigenden Dreiecksflanken an. Dabei schalten die Leistungstransistoren 60, 70 erst dann vollständig durch, wenn die Endstufensteuersignale 19 eine durch die jeweilige Schaltung und die Impedanz der Statorwicklungen 100, 110 vorgegebene Amplitude überschreiten. Bis zum Erreichen dieses Schalterzustandes liegt für die Leistungstransistoren 60, 70 ein Analogbetrieb vor. Nach dem Durchschalten der Leistungstransistoren 60, 70 ändert sich der Stromverlauf durch die Statorwicklungen 100, 110 nur noch geringfügig bis schließlich durch die abfallenden Flanken im Endstufensteuersignal 19 ein langsamer Stromabfall ausgelöst wird.

Durch Verändern der Amplitude des Ausgangssignals des Drehzahleinstellungsschaltkreises 36 ist es somit möglich, die Impulslängen durch die Statorwicklungen 100, 110 innerhalb des durch die Sensorsignale 5, 6 vorgegebenen Zeitrahmens zur Drehzahleinstellung zu verändern.

Wenn es gewünscht ist, die Drehzahl in einem geschlossenen Regelkreis zu regeln, kann, wie in Fig. 1 ebenfalls dargestellt ist, ein Drehzahlsensor 38 vorgesehen sein, der die Drehzahl n des Gleichstrommotors in eine Gleichspannung U umsetzt, die über eine Leitung 39 zum Drehzahleinstellungsschaltkreis 36 gelangt. Es ist dann möglich, eine Drehzahl einzustellen, die mit Hilfe des Drehzahlsensors 38 überwacht wird und beispielsweise bei einer infolge einer größeren Belastung geringer werdenden Drehzahl ein Nachregeln der Drehzahl durch Verändern des Ausgangssignals des Drehzahleinstellungsschaltkreises 36 zu bewirken.

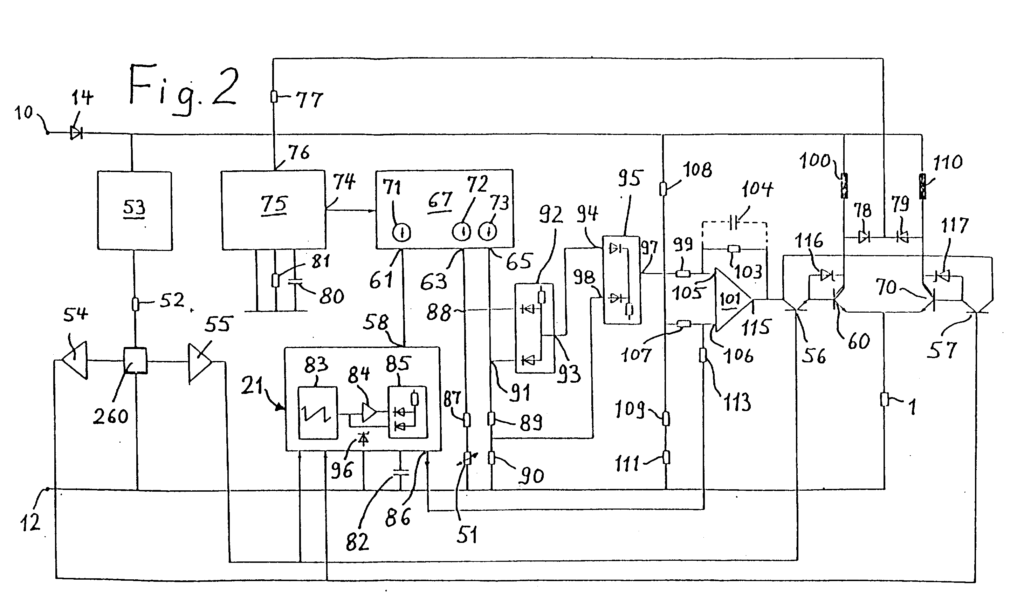

Zur Verdeutlichung einiger Einzelheiten des in Fig. 1 dargestellten Blockschaltbildes für eine erfindungsgemäße Treiberschaltung zeigt Fig. 2 beispielhafte Ausgestaltungen. Dabei sind aus Fig. 1 bereits bekannte Bauteile mit den gleichen Bezugszeichen versehen worden. Die Treiberschaltung gemäß dem in Fig. 2 dargestellten Ausführungsbeispiel dient ebenfalls zur Ansteuerung zweipulsiger, zweisträngiger, kollektorloser Gleichstrommotoren. Eine Veränderung des Drehmoments und/oder der Drehzahl des Gleichstrommotors erfolgt durch Ändern des Verhältnisses der Einschaltdauer zur Abschaltdauer innerhalb jeder Kommutierungsperiode, die dem oben erwähnten Zeitrahmen zugeordnet ist. Das Schalten des Motorstroms erfolgt "sanft", um Schaltgeräusche und hochfrequente Störungen soweit wie möglich zu unterdrücken. Aus diesem Grunde arbeiten die Leistungstransistoren 60, 70 während des Einschaltens bzw. Abschaltens zeitweise als lineare Verstärker, die den Strom durch die Statorwicklungen 100, 110 nach einer vorgegebenen Rampenfunktion allmählich mit geringer Flankensteilheit verändern. In der weiter unten näher erörterten Art und Weise wird die Drehzahl des Gleichstrommotors unter Benutzung der in den Statorwicklungen 100, 110 induzierten Spannung durch einen einfachen P-Regler geregelt. Als Führungsgröße der Drehzahl wirken die angelegte Betriebsspannung, der die Drehzahl in etwa proportional ist, und, falls gewünscht, die Umgebungstemperatur, die mit Hilfe eines Meßfühlers erfaßt wird, der einen temperaturabhängigen Widerstand 51, beispielsweise einen NTC-Widerstand enthält.

Die aus Fig. 1 bekannte Sensorschaltung enthält gemäß dem in Fig. 2 dargestellten Ausführungsbeispiel einen Hall-Generator 260, der mit seinem ersten Steuereingang mit der Anschlußklemme 12 und mit seinem zweiten Steuereingang über einen Widerstand 52 und eine Einrichtung für einen thermischen Überlastungsschutz 53 an die über die Anschlußklemme 10 und eine'Diode 14 zugeführte Betriebsspannung angeschlossen ist. Die Einrichtung für den thermischen Überlastungsschutz 53 enthält eine Überwachungsschaltung für die Temperatur der Leistungstransistoren 60, 70, um beim Überschreiten der zulässigen Übergangszonentemperatur der Leistungstransistoren 60, 70 mit einer Hysterese ein Abschalten zu gewährleisten.

Der Hall-Generator 260 liefert dem Magnetfeld des Gleichstrommotors proportionale Spannungen, die über Komparatoren 54 und 55 verstärkt werden, um die in Fig. 1 schematisch dargestellten Sensorsignale 5, 6 zu erzeugen. Die impulsförmigen Sensorsignale 5, 6 werden einerseits einer durch Transistoren 56, 57 gebildeten Verknüpfungsschaltung und andererseits dem Rampengenerator 21 zugeführt. Die Transistoren 56 und 57 entsprechen in ihrer Wirkung den in Fig. 1 dargestellten Schaltern 17 und 18.

Der Rampengenerator 21 ist als Dreiecksspannungsgenerator ausgebildet, der einen Steuereingang 58 aufweist, der mit dem ersten Ausgang 61 eines einen zweiten Ausgang 63 und einen dritten Ausgang 65 aufweisenden Stromgenerators 67 mit drei gesteuerten Stromquellen 71, 72 und 73 verbunden ist. Die Stromquellen 71, 72, 73 werden über eine geglättete Gleichspannung gesteuert, die am Ausgang 74 eines Tiefpassfilters 75 auftritt, das mit seinem Eingang 76 über einen Widerstand 77 und Dioden 78, 79 mit den transistorseitigen Enden der Statorwicklungen 100, 110 verbunden ist. Über die Dioden 78, 79 gelangt eine in den Statorwicklungen 100, 110 induzierte Spannung, die ein Maß für die Drehzahl darstellt, zum Tiefpaßfilter 75, das neben einem Filterkondensator 80 einen externen Festwiderstand 81 aufweist, um die Spannungs-Strom-Wandlung von den absoluten Toleranzen der internen Widerstände unabhängig zu machen. Da die in Fig. 2 dargestellte Treiberschaltung als integrierter Schaltkreis realisiert ist, verfügen einige Stufen Anschlüsse zur externen Beschaltung wie beispielsweise der erwähnte Filterkondensator 80 oder Festwiderstand 81.

Da das Ausgangssignal am Ausgang 74 des Tiefpaßfilters 75 ein der Drehzahl proportionales Signal ist, werden die Stromquellen 71, 72, 73 entsprechend der Drehzahl des Gleichstrommotors gesteuert.

Die erste Stromquelle 71 dient zum Aufladen eines Kondensators 82, der dem Rampengenerator 21 zugeordnet ist, so daß am Kondensator 82 eine rampenförmige Spannung entsteht. Durch regelmäßiges Entladen des Kondensators 82 wird in einem Sägezahngenerator 83 eine sägezahnförmige Spannung gebildet. Die Amplitude des Sägezahnsignals des Sägezahngenerators 83 ist damit weitgehend unabhängig von der Drehzahl und der Betriebsspannung. Die Sägezahnspannung wird mit Hilfe eines Inverters 84 in eine gegenläufige Sägezahnspannung umgesetzt. Beide Sägezahnspannungen, die ursprüngliche Sägezahnspannung und die invertierte Sägezahnspannung speisen, eine analoge Vergleichsschaltung 85, die am Ausgang 86 jeweils die niedrigere der beiden Spannungen abgibt, wodurch am Ausgang 86 eine dreieckförmige Signalspannung ansteht.

Damit der höchste Punkt des Dreieckspannungssignals annähernd in der Mitte zwischen zwei aufeinanderfolgenden Kommutierungszeitpunkten des Gleichstrommotors liegt und diese Lage unabhänig von der Betriebsspannung ist, ist die den Inverter 84 enthaltende Invertierungsstufe auf ein festes Bezugspotential gelegt, was durch eine Zenerdiode 96 veranschaulicht ist.

Die zweite drehzahlproportional gesteuerte Stromquelle 72 speist eine Serienschaltung aus einem Vorwiderstand 87 und dem als Temperaturmeßfühler dienenden temperaturabhängigen Widerstand 51, der ein Thermistor sein kann und dessen Eigenschaften über den Vorwiderstand 87 abstimmbar sind.

Der an dieser Serienschaltung auftretende Spannungsabfall stellt ein Maß für die momentane Drehzahl und die momentane Temperatur dar und kann am Schaltungspunkt 88 abgegriffen werden.

Die gesteuerte Stromquelle 73 steuert eine Reihenschaltung aus Festwiderständen 89 und 90. Der am zugeordneten Schaltungspunkt 91 auftretende Spannungsabfall ist ebenfalls der momentanen Drehzahl des Gleichstrommotors zugeordnet, jedoch nicht wie der am Schaltungspunkt 88 vorhandene Spannungsabfall zusätzlich noch temperaturabhängig.

Die Schaltungspunkte 88, 91 sind mit den beiden Eingängen einer Vergleicherstufe 92 verbunden, die an ihrem Ausgang 93 ein Signal abgibt, das dem jeweils niedrigeren Wert an ihren beiden Eingängen zugeordnet ist. Aufgrund der Auswahl des jeweils niedrigeren Wertes wird beim Unterschreiten einer vorgegebenen Grenztemperatur die Drehzahl des Gleichstrommotors nicht weiter abgesenkt, sondern auf einem minimalen Festwert gehalten, der durch die Festwiderstände 89 und 90 festgelegt ist.

Das Ausgangssignal der Vergleicherstufe 92 speist den ersten Eingang 94 einer weiteren Vergleicherstufe 95.

Die weitere Vergleicherstufe 95 dient einerseits dazu, bei Temperaturen oberhalb der unteren Grenztemperatur einen drehzahlgeregelten Betrieb zu ermöglichen. Wie die Vergleicherstufe 92 gibt die weitere Vergleicherstufe 95 an ihrem Ausgang 97 ein Signal ab, das dem jeweils größeren der beiden Eingangssignale entspricht. Als zweites Eingangssignal wird dem zweiten Eingang 98 der Spannungsabfall am Festwiderstand 90 zugeführt. Die weitere Vergleicherstufe 95 dient weiterhin dazu, bei Überschreiten einer gewissen oberen Grenztemperatur ein weiteres Anheben des Regelungsdifferenzsignals zu verhindern, so daß auch bei der höchstmöglichen Drehzahl die Impulse des Endstufensteuerungssignals 19 eine geringere zeitliche Länge aufweisen als die Impulse der Sensorsignale 5, 6 und somit noch eine Steuerung der Rampen an den Leistungstransistoren 60, 70 möglich ist und kein reiner Schalterbetrieb bei den Leistungstransistoren 60, 70 auftritt, was unerwünscht wäre, weil dadurch Laufgeräusche und elektrische Störungen erzeugt würden.

Der Ausgang 97 der weiteren Vergleicherstufe 95 ist über einen Widerstand 99 mit einem Vergleichsverstärker 101 verbunden, der als linearer Verstärker mit einem Gegenkopplungswiderstand 103 geschaltet ist, der durch einen Kondensator 104 als Dämpfungselement überbrückt ist und mit dem ersten Eingang 105 in Verbindung steht.

Der zweite Eingang 106 des Vergleichsverstärkers 101 ist über einen Widerstand 107 an eine mit der Betriebsspannungsquelle verbundenen Reihenschaltung aus Widerständen 108, 109, 111 angeschlossen. Der Vergleichsverstärker 101 vergleicht somit die in ihren Grenzwerten beschränkte sowie der Temperatur und/oder der Drehzahl zugeordnete am ersten Eingang 105 anliegende Spannung mit einer über den Widerstand 107 zugeführten Spannung, der jedoch über einen Widerstand 113 die am Ausgang 86 auftretende Dreiecksspannung überlagert ist.

Das Ausgangssignal des Vergleichsverstärkers 101 ist demnach ein dreieckförmiges Spannungssignal, dessen Amplitude von dem Vergleich der Spannungen an den Eingängen 105, 106 abhängt. Mit abnehmender Drehzahl bzw. zunehmender Temperatur wächst die mittlere Amplitude des Ausgangssignals des Vergleichsverstärkers 101, wobei einem veränderbaren Gleichspannungssignal immer ein Dreieckspannungssignal überlagert ist.

Der Vergleichsverstärker 101 wirkt als Drehzahlregler, dessen Verstärkung durch den Widerstand 99 und den Gegenkopplungswiderstand 103 definiert ist. Dabei dient der über den Widerstand 107 abgegriffene Spannungsabfall als Sollwert der Drehzahl, dem eine Dreieckspannung zur Bildung einer rampenförmig an- und absteigenden Stromkurve in den Statorwicklungen 100, 110 überlagert wird. Die Steilheit des Stromanstiegs bzw. Stromabfalls ist im wesentlichen durch das Verhältnis der Widerstände 107 und 113 definiert.

Das am Ausgang 115 des Vergleichsverstärkers 101 auftretende Signal wird über die als Analogschalter dienenden Transistoren 56, 57 abwechselnd entsprechend den durch die Kommutierunsphasen definierten Zeitrahmen den Leistungstransistoren 60, 70 zugeführt. Die Transistoren 56, 57 entscheiden dabei jeweils, welcher der beiden Leistungstransistoren 60, 70 das vom Vergleichsverstärker 101 gelieferte Endstufensteuersignal 19 erhält. Wie oben bereits erörtert, erfolgt diese Entscheidung mit Hilfe der Ausgangssignale der Komparatoren 54 und 55.

Um eine analoge Weiterverarbeitung der dreieckförmigen Endstufensteuersignale 19 des Vergleichsverstärkers 101 zu gewährleisten, ist als Gegenkopplungselement der bereits erwähnte Gegenkopplungswiderstand 1 vorgesehen.

Den Leistungstransistoren 60, 70 sind Zenerdioden zugeordnet, die dazu dienen, die maximale Abschaltspannung an den Leistungstransistoren 60, 70 zu begrenzen, so daß auch für den Fall, daß die Rampensteuerung der Leistungstransistoren 60, 70 nicht funktioniert, keine übermäßigen Abschaltspannungen entstehen.

Nachfolgend werden aufbauend auf den Grundprinzipien des in Fig. 1 dargestellten Blockschaltbilds weitere Ausführungsformen der Erfindung beschrieben.

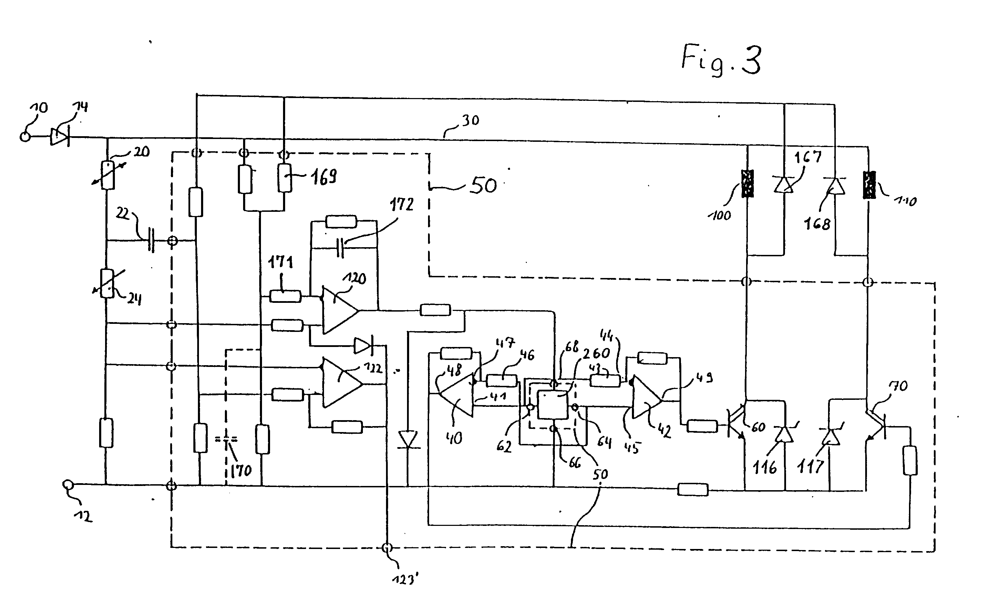

An den Anschlußklemmen 10 und 12 der in Fig. 3 dargestellten Schaltung liegt die konstante Betriebsspannung V_{cc}, beispielsweise 12 Volt Gleichstrom an, welche in Abhängigkeit von einem variablen Element 20, beispielsweise einem im Lüfterstrom befindlichen Thermistor in einer Schaltung 50 geregelt wird.

Eine Leitung 30 führt die Betriebsspannung über eine Diode 14 direkt an die Statorwicklungen 100 und 110.

Außerhalb der Schaltung 50 befindet sich in einer geeigneten Position zum nicht dargestellten permanentmagnetischen Rotor ein Hall-Generator 260 als Lagedetektor.

Die Schaltung 50 ist so entworfen, daß sie als integrierte Schaltung ausgelegt werden kann. Zwei Operationsverstärker 40 und 42 wirken in Verbindung mit dem Hall-Generator 260 als Komparatoren. Ein Ausgang 62 des Hall-Generators 260 ist unmittelbar mit dem nichtinvertierenden Eingang 41 des Komparators 40 und über einen Widerstand 43 mit dem invertierenden Eingang 44 des Komparators 42 verbunden. Der antivalente Ausgang 64 des Hall-Generators 260 liegt in gleicher Weise direkt am nichtinvertierenden Eingang 45 des Komparators 42 und über einen Widerstand 46 am invertierenden Eingang 47 des Komparators 40 an. Der Ausgang 48 des Komparators 40 ist mit dem Leistungstransistor 70 und der Ausgang 49 des Komparators 42 mit dem Leistungstransistor 60 verbunden, welche ihrerseits den Verstärkerstrom an die Statorspulen 100 bzw. 110 abgeben. Während der Hall-Generator 260 mit seinem Anschluß 66 am Pol 12 direkt anliegt, wird der Anschluß 68 über einen Operationsverstärker 120 in Abhängigkeit vom Thermistor 20 geregelt. Sowohl mit Hilfe des Operationsverstärkers 120 als auch mit Hilfe des Operationsverstärkers 122 erfolgt ein Soll- und Ist-Wert-Vergleich. Je nach einer vom Thermistor 20 in Abhängigkeit von der im Luftstrom herrschenden Temperatur in Verbindung mit einem Kondensator 22 erzeugten Spannung werden die Transistoren 60 und 70 so versorgt, daß sie im normalen Teillastbereich als analoge Verstärkerelemente wirken. Der Kondensator 22 verhindert ein sofortiges Abschalten durch den Operationsverstärker 122 beim Anlauf.

Im oberen Drehzahlbereich oder nahezu bei der maximal möglichen Drehzahl erfolgt die Drehzahlregelung überwiegend durch Variation der Einschaltdauer des Motorstroms. Im unteren Drehzahlbereich erfolgt die Drehzahlregelung wenigstens zusätzlich durch Variation der Amplitude des Motorstroms. Zusätzlich steht an einem Ausgang 123' eine temperaturunabhängige Sicherungsschaltspannung zur Verfügung, die den Motor bei Überlastung nach einer einstellbaren Zeit abschaltet. Bei Über- oder Unterschreitung eines Grenzwerts kann auch ein Alarmsignal abgegeben werden.

Wie man in Fig. 3 erkennen kann, sind die transistorseitigen Wicklungsenden der Statorwicklungen 100, 110 mit Dioden 167, 168 verbunden, durch die die in den Statorwicklungen- 100, 110 induzierten Spannungen so ausgekoppelt werden, daß eine drehzahlproportionale wellige Spannung entsteht, die den Operationsverstärkern 120, 122 zur Verknüpfung zugeführt wird. Der Operationsverstärker 122 dient zur Alarmausgabe bei Unterschreitung einer Grenzdrehzahl an den Ausgang 123'. Die induzierte Spannung wird über RC-Glieder 169, 170, bzw. Integratoren 171, 172 so gefiltert, daß die Welligkeit, bzw. der Wechselspannungsanteil dieser Spannung hinsichtlich ihrer Grundwelle um vorzugsweise 180 Grad verschoben wird. Das so gefilterte Signal wird der Steuerstrecke des Hall-Generators 260 überlagert, so daß auch die Ausgangssignale des Hall-Generators 260 eine Welligkeit aufweisen, die den Verstärkerstufen 40, 42 und damit den Leistungstransistoren 60, 70 zugeführt werden. Damit wird die Endstufe dazu veranlaßt, bei reduzierter Motorleistung Stromkurven zu formen, die etwa analog zu der Welligkeit der induzierten Spannung verlaufen und geringe Überschwingungen enthalten.

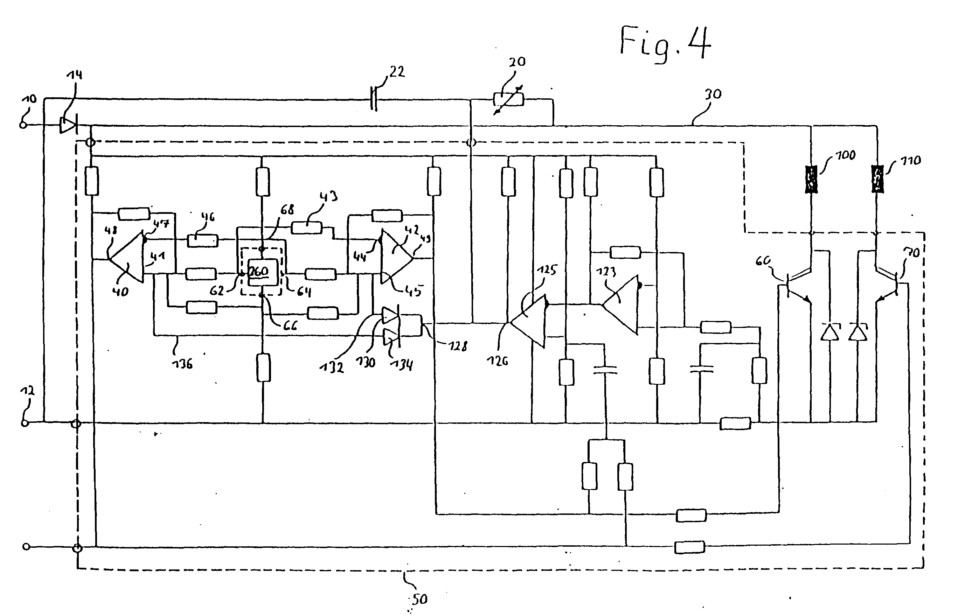

Während gemäß Fig. 3 die Steuerung der Schaltart und Schaltlage der Transistoren 60 und 70 über den Hall-Generator 260 erfolgt, ist gemäß Fig. 4 eine Schaltung zur Um- und Ansteuerung der Transistoren 60 und 70 mit Operationsverstärkern 123 und 125 vorgesehen, welche ein variables Signal am Ausgang 126 erzeugen, das über eine Ankopplung direkt an die nichtinvertierenden Eingänge 41 und 45 der Komparatoren 40 bzw. 42 angelegt wird. Dabei werden bei hohen Temperaturen am Thermistor 20 diese Eingänge 41 bzw. 45 in ihrer Spannung so abgesenkt, daß während der Kommutierungsphase die "Einschaltpausen" im Strom hinter den Transistoren 60 und 70 länger werden.

Die Drehzahl wird in Abhängigkeit von der Temperatur verstellt. Der Kondensator 22 wird bei jedem Kommutierungsschaltvorgang entladen und über den Thermistor 20 in Abhängigkeit von der gemessenen Temperatur unterschiedlich aufgeladen. Diese Spannung liegt über die Leitung 128 gleichzeitig über Dioden 130 bzw. 134 und Leitungen 132 bzw. 136 parallel zu den vom Hall-Generator 260 erzeugten Spannungen an den Eingängen 41 bzw. 45 an. Solange die vom Kondensator 22 gelieferte Spannung kleiner als die vom Hall-Generator 260 abgegebenen Spannungen ist, bleibt der Motorstrom abgeschaltet. Dadurch entsteht in Abhängigkeit von der Temperatur eine größere oder kleinere Einschaltverzögerung, der durch die Spulen 100 bzw. 110 fließenden Ströme. Diese alleinige Einschaltverzögerung kann zu unerwünschten, lauten Motorgeräuschen führen.

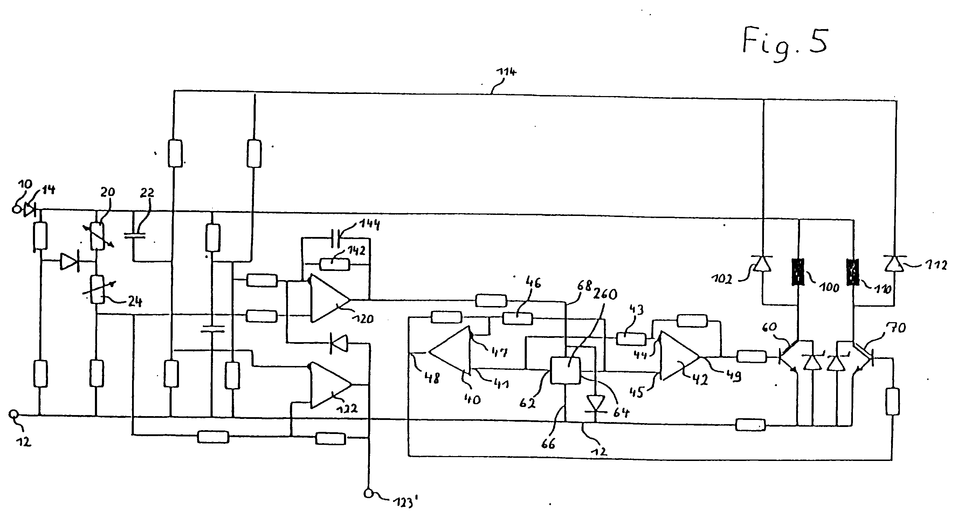

Deshalb ist in Fig. 5 in Abwandlung von Fig. 4 eine Schaltung angegeben, in welcher nicht die Pausen, sondern die Form des Stromverlaufs zwischen den Pausen beeinflußt wird. Es handelt sich um eine temperaturabhängige Drehzahlregelung im engeren Sinne. Als Maß für die vorhandene Drehzahl dient die Generatorspannung der nicht von Strom durchflossenen Spulen 100 bzw. 110, welche über Dioden 102 bzw. 112 und eine Leitung 114 an die invertierenden Eingänge der Operationsverstärker 120 bzw. 122 angelegt werden. Die hierdurch überlagerte Welligkeit dieser Spannung dient auf analogem Wege zur Formung abgerundeter Stromverläufe der Ströme zu den Spulen 100 bzw. 110 zwischen den "Pausen", welche kurz gehalten werden, da sie gemäß dieser Schaltung nicht beeinflußt werden. Die Folge ist ein im Vergleich zur Ausführungsform gemäß Fig. 4 ruhiger und leiser Lauf des Motors. Der Sollwert für die Drehzahl wird auch in diesem Schaltungsbeispiel über den Thermistor 20 in Abhängigkeit von der Temperatur gewonnen. Durch einen einstellbaren Spannungsteiler 24 kann zusätzlich eine Mindestdrehzahl vorgegeben werden. Die Schaltung kann außerdem so eingerichtet werden, daß bei einer Drehzahl, die 50 % unter einer Solldrehzahl liegt, der Motor vollständig abgeschaltet werden kann.

Außerdem kann am Ausgang 123' ein Alarmsignal bei zuniedriger Drehzahl abgegeben und/oder weiter verarbeitet werden.

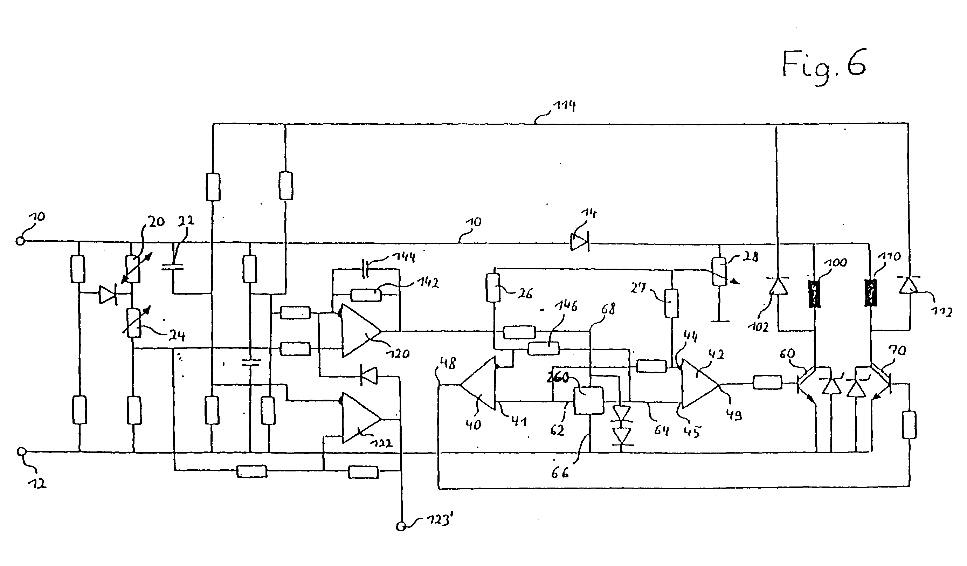

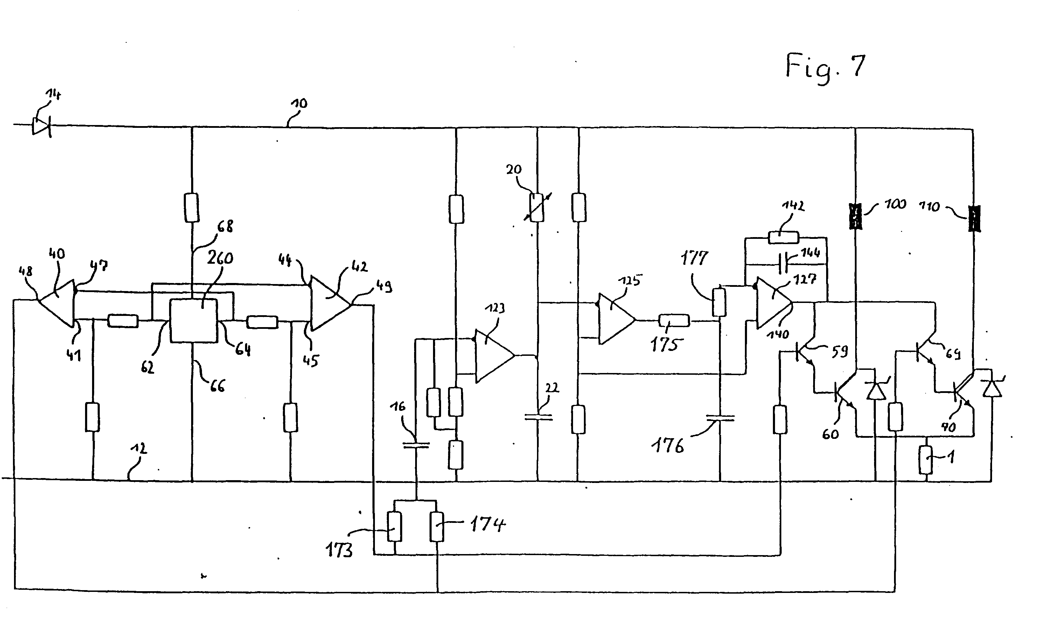

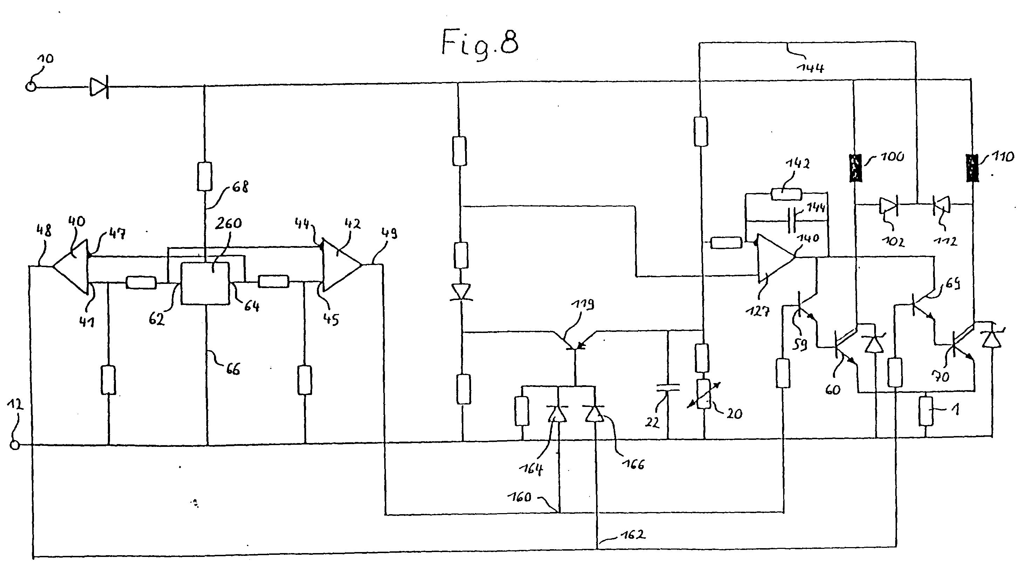

In Fig. 6 ist eine gegenüber Fig. 5 abgewandelte Schaltung angegeben. Die Form des Einschaltstroms, d.h. dessen Abrundungen wird wie zuvor beschrieben erzeugt. Die gleichzeitige ebenfalls vorbeschriebene Regelung der Einschaltpausen kann über die Glieder 28 und 26 bzw. 27 zusätzlich einstellbare Grenzen erhalten.

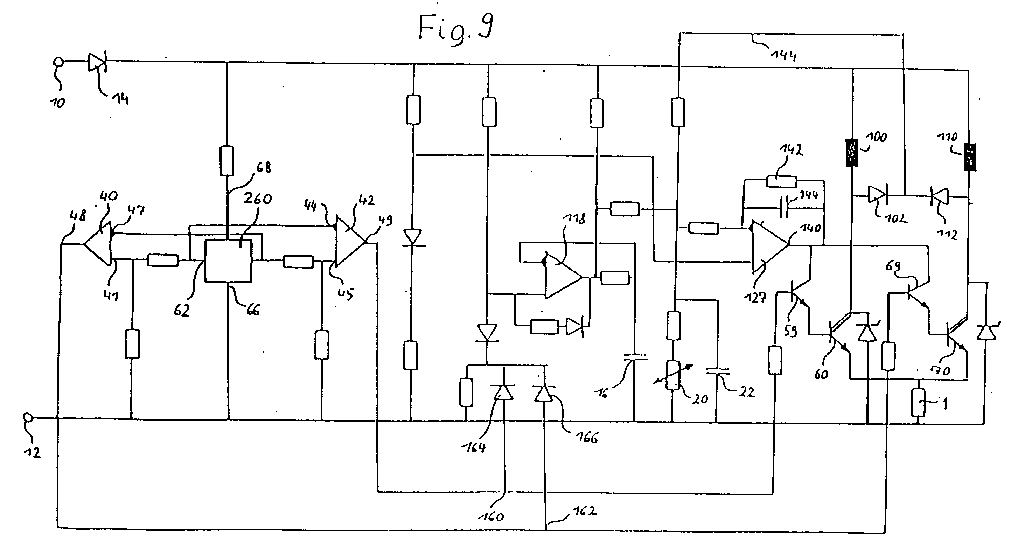

In Fig. 7 ist eine Schaltung angegeben, in welcher eine direkte Beeinflussung der Leistungsstufe parallel und hinter der Hall-Generatorstufe erfolgt. Der Ausgang 48 liegt über einen Transistor 69 an dem Endstufentransistor 70 und der Ausgang 49 über einen Transistor 59 an dem Endstufentransistor 60 an. Das bei entsprechender Temperatur vom Thermistor 20 ausgehende Signal zum Verändern der Einschaltpause des Stroms zur Spule 100 bzw. 110 wird über den Operationsverstärker 127 an dessen Ausgang 140 gewonnen und über jeweils eine Halbleiterstrecke in den Transistoren 59 bzw. 69 mit schaltender Wirkung eingeben. Der invertierende Eingang des Operationsverstärkers 127 ist zum Ausgang 140 mit einem Kondensator 144 mit geringer Kapazität und einem Widerstand 142 überbrückt.

Zusätzlich ist eine Kapazität 16 vorhanden, welche über einen Operationsverstärker 123 eine nachstehend näher beschriebene Flankendarstellung des Stromverlaufs zwischen den Einschaltpausen ermöglicht.

Wie man aus dem Schaltbild gemäß Fig. 7 erkennt, wird bei der dort angegebenen Treiberschaltung nicht die induzierte Spannung als Maß für die Drehzahl benutzt, sondern der zeitliche Abstand zweier Kommutierungstakte. Dazu werden die aus dem Hall-Signal gewonnenen Rechteckimpulse an den Ausgängen 48, 49, der Komparatorstufen 40, 42 benutzt. Sie werden über zwei Widerstände 173, 174 addiert, wobei das Summensignal über den Kondensator 16 dem Komparator 123 zugeführt wird. Dieser Komparator wird bei jedem Kommutierungswechsel, d.h. bei jedem Wechsel der Einschaltzustände der Transistoren 60 und 70, kurzzeitig leitend und entlädt den Kondensator 22, der anschließend Gelegenheit hat, sich über den temperaturabhängigen Widerstand 20 aufzuladen. Je nach der Temperatur erfolgt diese Aufladung schneller oder langsamer. Außerdem ist der Ladezustand des Kondensators 22 von der Zeitdauer des Ladens und damit von der Drehzahl abhängig. Damit sind an dem Widerstand 20 und dem Kondensator 22 beide Informationen vorhanden, die gebraucht werden, um eine temperaturabhängige Drehzahlregelung zu ermöglichen. Das zugeordnete Signal wird mit der einem festen Spannungsteiler entnommenen Spannung verglichen und das Differenzsignal einem Operationsverstärker 125 zugeführt. Das Ausgangssignal des Operationsverstärkers wird über ein erstes Filterglied 175, 176 und einen Integrator mit einem Vorwiderstand 177, einem Rückkopplungskondensator 144 und Operationsverstärker 127 gefiltert. Das Filtersignal wird schließlich den Analogschaltern 59 und 69 zugeführt. Die Analogschalter 59, 69 erhalten außerdem das Ausgangssignal der Komparatorschaltungen 40, 42. Damit wird die Endstufe einerseits nach Maßgabe der Ausgangsspannungen der Komparatoren 40 und 42 eingeschaltet und andererseits wird die Einschaltdauer und der maximale Basisstrom der Leistungstransistoren 60, 70 von dem Ausgangssignal des Operationsverstärkers 127 beeinflußt.

Auf diese Weise wird erreicht, daß der Strom des Motors nicht über die volle Einschaltdauer, die vom Hall-Element 260 vorgegeben ist, eingeschaltet sein kann, sondern in Abhängigkeit von der durch das Element 20 erfaßten Umgebungstemperatur variabel ist. Durch die Filterung an den Filterstufen 175, 176 bzw. 177 und 144 wird erreicht, daß aus dem ursprünglich dreieckförmigen oder sägezahnförmigen Signal an dem Ausgang des Operationsverstärkers 125 ein stark verrundetes Signal erzeugt wird, welches eine günstige Voraussetzung für einen geräuscharmen Motorlauf darstellt.

Während in den voraufgegangenen Ausführungsbeispielen die Drehzahlmessung und Drehzahlregelung und die Ausbildung der Form des Stromimpulses ineinander übergehen, wird in dem zuletzt erläuterten und den folgenden Beispielen für die analoge Regelungsphase eine Pulsform gezielt von hierfür vorgesehenen Bauelementen abgeleitet. Zum Beispiel kann ein Sägezahngenerator mit den Elementen 118 oder 119 gemäß Fig. 8 oder 9 eingefügt werden, welcher aus den Einschaltpulsen sägezahnförmige Hilfssignale mit Hilfe einer Kapazität, beispielsweise der Kapazität 16 (22) erzeugt. Die Ausführungsform gemäß Fig. 8 kommt hierbei mit einfachen Bauelementen und nur einer Kapazität aus. Es ist Ziel der Erfindung, die neue Schaltung in einen Chip zu integrieren und deshalb ist es von Vorteil, die Anzahl der.Kondensatoren gering zu halten. Die Schaltung gemäß Fig. 9 hat, wie bereits die Schaltung nach Fig. 8, Abgriffe 160 und 162 an den Zuleitungen von den Ausgängen 48 zum Transistor 70 bzw. 49 zum Transistor 60. Über Dioden 164 und 166 liegt die Spannung pulsförmig entweder direkt an einem Transistor 119 (Fig. 8) oder an einer weiter gemäß Fig. 9 ausgestalteten Schaltung mit einem Operationsverstärker 118 an. Die gewonnene Signalform liegt am invertierenden. Eingang des Operationsverstärkers 127 an.

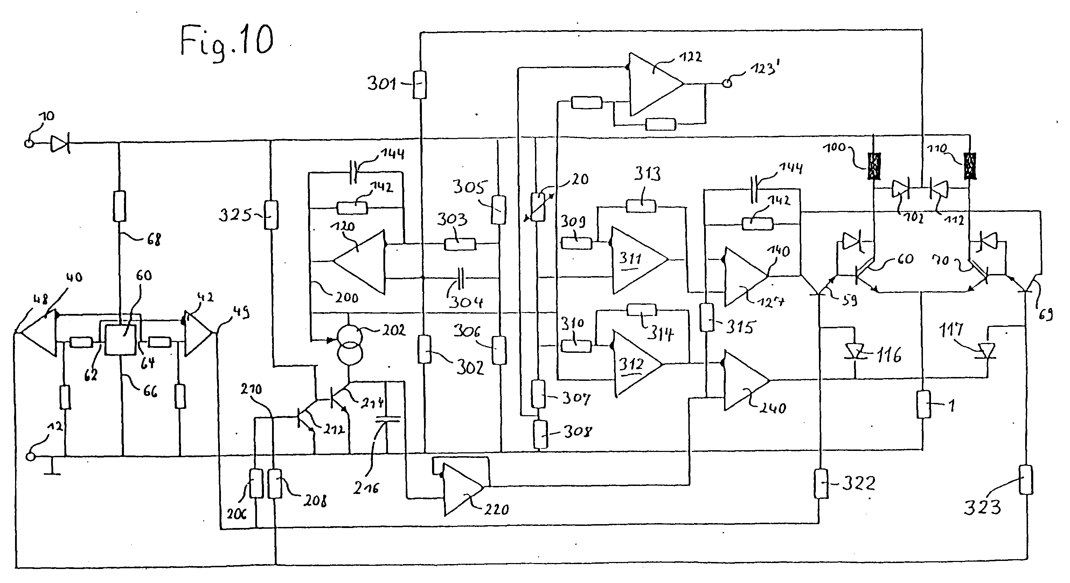

In einer Prinzipschaltung gemäß Fig. 10 ist die Messung der Drehzahl durch induzierte Spannung weitergehend von der Pulsformung getrennt. Die induzierte Spannung wird noch besser geglättet. Zugleich wird aber die Erzeugung einer Einschaltpause und einer Flankenrampe, entlang welcher eine analoge Regelung stattfindet, durch einen Sägezahngenerator abgeleitet. Am Punkt 210 steht über Widerstände 206 und 208 eine Signalspannung zur Verfügung, welche lediglich pulsförmig durch die Einschaltpausen unterbrochen ist. Aus diesem Signal wird hinter den Transistoren 212 und 214 mit Hilfe eines einzigen Kondensators 216 ein Sägezahnsignal gewonnen. Nach dem verbleibenden senkrechten Signalspannungsabfall am Anfang jeder Schaltpause wird nach einer sich selbstregelnden Dauer der Pause eine linear bis zur vollen Spannung ansteigende Flanke und damit eine Rampe erzeugt, längs der die analoge Regelung während der Einschaltpause in Abhängigkeit von dem aus dem Soll-Ist-Wertvergleich gewonnenen Signal geführt werden kann. Die Vorgabe kann durch Veränderung der Spannungsquelle 202 verändert werden. Der Ist-Wert wird über den Ausgang 200 zugeführt. Das mit der Rampe versehene Signal wird über die Operationsverstärker 220 und 240 in den Regelkreis so eingefügt, daß eine Positionierung und Abschaltrampensteigung des Stromimpulses zur Vermeidung von Verlustleistungen verfügbar ist.

Wie man dem in Fig. 10 gezeigten Schaltbild entnehmen kann, wird wiederum mit Hilfe zweier Dioden 102, 112 die in den nichtbestromten Statorwicklungen 100, 110 induzierte Gegen-EMK als Maß für die Drehzahl ausgekoppelt und-über einen Widerstand 301 der Zwischenverstärkerstufe 120 zugeführt, welche durch den Kondensator 144 als Tiefpaßfilter wirkt. Der Zwischenverstärker 120 steuert die gesteuerte Stromquelle 202, die den Kondensator 216 auflädt, welcher in regelmäßigen Abständen durch die Transistoren 212 und 214 entladen wird. Zur Entladung des Kondensators 216 ist es erforderlich, daß der Transistor 214 kurzzeitig leitend wird. Dazu dienen Hilfsimpulse, die am Schaltungspunkt 210 auftreten.

Die Erzeugung der Hilfsimpulse erfolgt auf folgende Weise: Der Hall-Generator 260 liefert seine Spannung an zwei Komparatoren 40 und 42, an deren Ausgängen Rechtecksignale entstehen, die um 180° phasenversetzt sind und deren Hoch-Zustände etwas kürzer sind als die Tief-Zustände, so daß durch Summation dieser Signale mit den Widerständen 206 und 208 am Punkt 210 kurzzeitige Tief-Impulse bei jedem Kommutierungstakt entstehen. Dadurch wird der Transistor 212 kurzzeitig abgeschaltet und ermöglicht einen Basisstrom für den Transistor 214 und einen Vorwiderstand 325. Es entsteht am Kondensator 216 eine Sägezahnspannung, deren Amplitude annähernd unabhängig von der Drehzahl ist, da die Ladestromstärke dieses Kondensators der zur Verfügung stehenden Zeit zwischen zwei Kommutierungsimpulsen proportional angepaßt ist. Das drehzahlproportionale Signal, welches am Ausgang 200 des Verstärkers 120 gewonnen wird, wird einem Soll-Ist-Wert-Vergleich zugeführt. Als Soll-Wert dient eine von der Temperatur über den Thermistor 20 abhängig gemachte Spannung eines die Widerstände 307 und 308 enthaltenden Spannungsteilers. Die Mittelpunktspannung dieses Spannungsteilers wird dem nichtinvertierenden Eingang eines Verstärkers 311 und über einen Vorwiderstand 310 dem invertierenden Eingang eines Verstärkers 312 zugeführt. An die jeweils anderen Eingänge der Verstärker wird das der Drehzahl proportionale Signal vom Ausgang 200 zugeführt.

Auf diese Weise entsteht am Ausgang des Verstärkers 311 ein mit zunehmender Temperatur und abnehmender Drehzahl wachsendes Potential und am Verstärker 312 ein mit zunehmender Temperatur und abnehmender Drehzahl abnehmendes Potential. Diese Potentiale werden den ersten Eingängen der Verstärker 127 und 240 zugeführt, an deren zweiten Eingängen das Sägezahnsignal des Impedanzwandlers 220 anliegt.

Der Verstärker 127 ist als linearer Verstärker geschaltet, wozu der Widerstand 315 und der Widerstand 142 vorgesehen sind. Gedämpft ist der Verstärker durch den Hilfskondensator 144.

Am Ausgang 140 des Verstärkers 127 entsteht ein rampenförmiges Signal, welches in Abhängigkeit von der Temperatur und von der Drehzahl sich so verhält, daß mit zunehmender Temperatur bzw. abnehmender Drehzahl das mittlere Potential am Ausgang 140 ansteigt. Diesem Signal ist das Rampensignal des Ausgangs des Impedanzwandlers 220 überlagert, so daß mit zunehmender Temperatur, bzw. abnehmender Drehzahl die Endstufenschaltung dazu veranlaßt wird, später nach der Vorgabe einer Rampenfunktion abzuschalten.

Der Verstärker 240 ist als Komparator geschaltet. Er vergleicht, das Ausgangspotential des Verstärkers 312 mit dem Sägezahnsignal des Sägezahngenerators 220. Eine Veränderung des Potentials am Ausgang des Verstärkers 312 bewirkt eine Verschiebung des Schaltpunktes des Komparatorverstärkers 240 in dem Sinne, daß mit zunehmender Drehzahl, bzw. abnehmender Temperatur der Ausgang des Verstärkers 240 längere Zeit auf dem Tief-Zustand bleibt, womit die Endstufenschaltung längere Zeit abgeschaltet bleibt, bevor sie einschalten kann. Damit wird eine der Drehzahl proportionale und der Temperatur umgekehrt proportionale Pause nach dem Kommutierungstakt eingeführt.

Zusätzlich zur Drehzahlmessung für regelungstechnische Zwecke wird eine zweite Drehzahlmessung durchgeführt, wozu der Komparator 122 vorgesehen ist. Dieser hat als Soll-Wert einen niedrigeren Spannungswert, der mit den Widerständen 307 und 308 erzeugt wird, d.h. dieser Komparator 122 reagiert an seinem Ausgang 123' bei Unterschreitung eines zweiten Soll-Wertes, welcher beliebig vorgebbar ist und als Alarmgrenze dient.

Die Schaltung hat insgesamt die Eigenschaft, daß in Abhängigkeit von der Temperatur und von der momentanen Drehzahl in einem ersten Zeitabschnitt die Endstufentransistoren 60, 70 nicht eingeschaltet werden, d.h. das Einschalten wird nach Maßgabe des Temperatur- und Drehzahlreglers verzögert.- Daraufhin werden die Endstufentransistoren 60, 70 für eine gewisse Zeit eingeschaltet. Die Einschaltdauer hängt ebenfalls von der Temperatur und der Drehzahl ab. In einem dritten Zeitabschnitt erfolgt eine Abschaltung der Endstufentransistoren 60, 70 nach einer vorgegebenen Rampenfunktion, wobei die Endstufentransistoren 60, 70 als analoge Elemente verwendet werden und es bleibt ein vierter Zeitabschnitt bis zum nächsten Kommutierungstakt, in dem der andere Endstufentransistor die Möglichkeit hat einzuschalten.

## Patentansprüche

1. Treiberschaltung zur Leistungs- bzw. Drehzahlveränderung eines kollektorlosen Gleichstrommotors mit einer Rotorstellungssensorschaltung, sowie mit Endstufen (60, 70), denen innerhalb jeder durch die Rotorstellungssensorschaltung (2) bestimmten Kommutierungsphasen Steuerimpulse (19) zugeführt werden, deren jeweilige Dauer und/oder Amplitude zur Steuerung der dem Motor zugeführten Leistung variiert wird, dadurch gekennzeichnet, daß ein Dreiecksgenerator (21) zur Erzeugung eines Dreieckssignales (31), welches von den Sensorsignalen (5, 6) der Rotorsensorsteuerschaltung abgeleitet ist, vorgesehen ist, wobei die Periodendauer des Dreieckssignales (31) etwa einer Kommutierungsphase entspricht, der Momentanwert dieses Dreieckssignales mit einem Referenzwert (36) verglichen wird und eine vorgegebene Abweichung dieses Dreieckssignales vom Referenzwert die Einschaltdauer sämtlicher Endstufen (60, 70) festlegt.

2. Treiberschaltung nach Anspruch 1, bei der der Dreiecksgenerator (83; 202, 214, 216) einen Ladekondensator (82, 216) und eine Ladestromquelle (71, 202) aufweist,
dadurch gekennzeichnet, daß der Ladestrom der Motordrehzahl annähernd proportional ist.

3. Treiberschaltung nach Anspruch 1, bei der der Dreiecksgenerator einen Ladekondensator und eine Ladestromquelle aufweist,
dadurch gekennzeichnet, daß der Ladestrom durch einen Temperatursensor derart gesteuert wird, daß er mit zunehmender Temperatur zunimmt.

4. Treiberschaltung nach Anspruch 2,
dadurch gekennzeichnet, daß die Ladestromquelle (71, 202) durch eine Drehzahlsensoranordnung gesteuert wird.

5. Treiberschaltung nach Anspruch 4,
dadurch gekennzeichnet, daß die Drehzahlsensoranordnung durch eine Schaltung (78, 79, 75; 102, 112, 301, 120) dargestellt wird, die die rotatorisch induzierte Spannung wenigstens einer Statorwicklung (100, 110) im nicht stromdurchflossenen Zustand mißt.

6. Treiberschaltung nach Anspruch 4,
dadurch gekennzeichnet, daß die Drehzahlsensoranordnung durch einen Frequenz/Spannungs-Wandler gebildet wird, der die Frequenz der Lagesensorsignale als Maß für die Drehzahl benutzt.

7. Treiberschaltung nach Anspruch 6,
dadurch gekennzeichnet, daß für den Frequenz/Spannungs-Wandler ein Sägezahngenerator benutzt wird, der durch den Dreiecksgenerator dargestellt ist, welcher den Schaltzeitpunkt wenigstens einer der Stromflanken (Ein- und/oder Ausschaltflanke) der Endstufentransistoren durch Vergleich mit Referenzspannungen beeinflußt.

8. Treiberschaltung nach einem der Ansprüche 1 bis 7, mit mindestens zwei Statorwicklungen (100, 110), zwei Endstufen (60, 70) und einer Rotorstellungssensorschaltung (2), die zwei um 180° gegeneinander phasenverschobene Ausgangssignale (5, 6) abgibt,
dadurch gekennzeichnet, daß die Rotorstellungssensorschaltung (2) derart ausgebildet ist, daß das Tastverhältnis der Ausgangssignale von 50% abweicht, daß die beiden Ausgangssignale (5, 6) zu einem Impulslücken aufweisenden Summensignal addiert (206, 208) werden und daß das Summensignal den Dreiecksgenerator (83; 202, 214, 216) ansteuert.

9. Treiberschaltung nach einem der vorstehenden Ansprüche,
dadurch gekennzeichnet, daß sowohl die Vorderflanken als auch die Rückflanken der Steuerimpulse durch Vergleich eines Dreiecks- oder Sägezahnsignals mit Referenzsignalen festgelegt werden.

10. Treiberschaltung nach einem der vorstehenden Ansprüche,
dadurch gekennzeichnet, daß in der durch die Rotorstellungssensorschaltung (2) vorgegebenen Kommutierungsphase die Endstufen (60, 70) in einem ersten Zeitabschnitt als Schalter und in einem zweiten Zeitabschnitt als analoge Verstärkerelemente arbeiten, in dem der zuvor eingeschaltete Strom nach einer vorgegebenen Rampenfunktion reduziert wird.

11. Treiberschaltung nach Anspruch 10,
dadurch gekennzeichnet, daß das Dreieckssignal in einem Verstärker (127) mit einer Referenzspannung derart verknüpft wird und das Ergebnis die rampenförmigen Steuerimpulse bildet, daß ein Teil der Dreiecksflanke die Abfallflanke der Steuerimpulse bildet.

12. Treiberschaltung nach Anspruch 11,
dadurch gekennzeichnet, daß das Dreieckssignal in einem Komparator (240) mit einer Referenzspannung verglichen wird und das Ergebnis zum Verzögern der Anstiegflanke der rampenförmigen Steuerimpulse herangezogen wird.

13. Treiberschaltung nach einem der Ansprüche 1 bis 8,
dadurch gekennzeichnet, daß der Dreiecksgenerator (21) aus einem Sägezahngenerator (83) und einer Impulsformerschaltung (84, 85) besteht, die aus einem Sägezahnsignal eine Dreiecksspannung mit einer ansteigenden und abfallenden Flanke ableitet, deren Spitzpunkt annähernd symmetrisch in der Mitte zwischen den beiden Flanken der Dreiecksspannung, und damit auch in der Mitte der Kommutierungsphase, liegt.

14. Treiberschaltung nach Anspruch 13,
dadurch gekennzeichnet, daß die Dreiecksspannung einer Schwellenwertschaltung (33, 101) zugeführt wird, die nur die eine Referenzspannung (35, 105) übersteigenden Signalanteile als rampenförmige Steuerimpulse an die Endstufen (60, 70) abgibt.

15. Treiberschaltung nach Anspruch 9, 11, 12 oder 14,
dadurch gekennzeichnet, daß die Referenzspannungen (35, 105) zur Steuerung der Motorleistung bzw. -drehzahl beeinflußt sind.

16. Treiberschaltung nach einem der Ansprüche 1 bis 15,
dadurch gekennzeichnet, daß die Motordrehzahl durch eine Drehzahleinstellschaltung (36) einstellbar ist.

17. Treiberschaltung nach einem der Ansprüche 1 bis 15,
dadurch gekennzeichnet, daß die Steuerung der Motorleistung bzw. -drehzahl durch eine extern vorgebbare physikalische Größe in einer offenen Steuerkette erfolgt.

18. Treiberschaltung nach einem der Ansprüche 1 bis 15,
dadurch gekennzeichnet, daß die Steuerung der Motorleistung bzw. -drehzahl durch eine extern vorgebbare physikalische Größe in einem geschlossenen Regelkreis erfolgt.

19. Treiberschaltung nach Anspruch 17 oder 18,
gekennzeichnet durch einen Temperatursensor (51, 20) zur Beeinflussung der Motorleistung bzw. -drehzahl.

## Claims

1. A driver circuit for varying the power and rotation of a collectorless DC motor having a rotor positioning sensing circuit and end stages (60, 70), which are fed with control pulses (19) switched during each commutating period, which in turn is sensed by the rotor positioning sensing circuit (2), whereby the switching duration and/or amplitude of the said control pulses are varied so as to regulate the power applied to the motor,
characterized in that there is a triangular signal generator (21) provided for producing a triangular signal (31), which is derived from the signals (5, 6) coming out of the rotor positioning sensing circuit, whereby the period of the said triangular signal (31) is about the period of one commutation and the instantaneous value of the said triangular signal is compared with a reference signal (36) and a given deviation of the triangular signal from the reference signal establishes the switching duration of all end stages (60, 70).

2. A driver circuit according to claim 1, whereby the triangular signal generator (83, 202, 214, 216) is equipped with a input capacitor (82, 216) and a charging current source (71, 202),
characterized in that the charging current is about proportional to the rotational motor speed.

3. A driver circuit according to claim 1, whereby the triangular signal generator is equipped with a input capacitor and a charging current source,
characterized in that the charging current is controlled by a temperature sensor in such a way that the charging current increases as the temperature rises.

4. A driver circuit according to claim 2,
characterized in that the charging current source (71, 202) is controlled by a rotational speed sensing arrangement.

5. A driver circuit according to claim 2,
characterized in that the rotational speed sensing arrangement is a circuit (78, 79,75 ; 102, 112, 301, 120), which measures the rotational induced voltage of at least one of the stator windings (100, 110) in the state without current.

6. A driver circuit according to claim 4,
characterized in that the rotational speed sensing arrangement is a frequency/voltage converter utilizing the frequency of the positioning sensing signals as a measure for the rotation.

7. A driver circuit according to claim 6,
characterized in that a saw-tooth generator is used as a frequency/voltage converter, which in turn is a triangular signal generator, which influences the switching time of at least one of the edges of the current ( on- and/or off-switch edge) of the end stage transistors by comparison with reference voltages.

8. A driver circuit according to one of the claims 1 to 7 with at least two stator windings (100, 110), two end stages (60, 70) and a rotor positioning sensing circuit (2), which gives two 180°-out of phase output signals (5, 6),
characterized in that the rotor positioning sensing circuit (2) is constructed so that the pulse duty factor of the output signals deviates from 50% and that both of the output signals (5, 6) are added to a summed signal having pulse gaps and that the summed signal triggers the triangular signal generator (83; 202, 214, 216).

9. A driver circuit according to one of the previous claims,
characterized in that the leading edges as well as the trailing edges of the control pulses will be determined by comparison of a triangular signal or a saw-tooth signal with reference signals.

10. A driver circuit according to one of the previous claims,
characterized in that, in the commutation period determined by the rotor positioning sensing circuit (2), the end stages (60, 70) function in a first time period as a switch and in a second time period as analog amplifier units, whereby the previously switched-on current is reduced according to a given ramp function.

11. A driver circuit according to claim 10,
characterized in that the triangular signal is connected with a reference voltage in an amplifier (127) with the result of ramp-like control pulses so that a part of the triangular edge being the trailing edge of the control pulses.

12. A driver circuit according to claim 11,
characterized in that the triangular signal is compared with a reference voltage by means of a comparator (240) and the result is used for delaying the leading edges of the ramp-like control pulses.

13. A driver circuit according to claim 1 to 8,
characterized in that the triangular signal generator (2) comprises a saw-tooth generator (83) and a pulse-forming circuit (84, 85) for deriving a saw-tooth signal resulting in a triangular voltage with a leading- and a trailing edge with its peak lying roughly symmetrically in the midst of both of the leading- and trailing edges of the triangular voltage, and therefore also in the centre of the commutation period.

14. A driver circuit according to claim 13,
characterized in that the triangular voltage is fed into a threshold circuit (33, 101) in such a manner that its output, which goes to the end stages (60, 70) as ramp-like control pulses, consists only of that part of signals exceeding a reference voltage (35, 105).

15. A driver circuit according to one of the claims 9, 11, 12, or 14,
characterized in that the reference voltages (35, 105) are influenced for the control of power or rotation of the motor, respectively.

16. A driver circuit according to one of the claims 1 to 15,
characterized in that the rotational motor speed is adjustable by means of a rotation adjusting circuit (36).

17. A driver circuit according to one of the claims 1 to 15,
characterized in that the power or rotation of the motor is controlled, respectively, by means of a externally given physical parameter in a open-loop system.

18. A driver circuit according to one of the claims 1 to 15,
characterized in that the power or rotation of the motor, respectively, is controlled by means of an externally given physical parameter in a closed loop control system.

19. A driver circuit according to claim 17 or 18,
with a temperature sensor (51, 20) for influencing the power or rotation of the motor, respectively.

## Revendications

1. Circuit de commande servant à modifier la puissance ou la vitesse de rotation d'un moteur à courant continu sans collecteur comprenant un circuit de détection (2) de la position du rotor, ainsi que des étages terminaux (60,70) auxquels sont amenés des impulsions de commande (19 à l'intérieur de chacune des phases de commutation déterminées par le circuit de détection de la position du rotor (2), impulsions de commande dont on fait varier la durée et/ou l'amplitude respectives pour commander la puissance amenée au moteur,
caractérisé en ce qu'
on prévoit une génératrice en triangle (21) pour produire un signal (31) qui est dérivé des signaux de détection (5, 6) du circuit de commande de détection de la position du rotor, la durée de la période du signal en triangles (31) correspondant à peu près à une phase de commutation, la valeur momentanée de ce signal en triangles étant comparée à une valeur de référence (36), et un écart prédéfini de ce signal en triangles par rapport à la valeur de référence fixant la durée de branchement de l'ensemble des étages terminaux (60, 70).

2. Circuit de commande selon la revendication 1, dans lequel la génératrice en triangle (83, 202, 214, 216) présente un condensateur de charge (82, 216) et une source de courant de charge (71, 202),
caractérisé en ce que
le courant de charge est à peu près proportionnel à la vitesse de rotation du moteur.

3. Circuit de commande selon la revendication 1, dans lequel la génératrice en triangle (83, 202, 214, 216) présente un condensateur de charge (82, 216) et une source de courant de charge (71, 202),
caractérisé en ce que
le courant de charge est commandé par un détecteur de température d'une manière telle que le courant augmente quand la température augmente.

4. Circuit de commande selon la revendication 2,
caractérisé en ce que
la source du courant de charge (71, 202) est commandée par un dispositif de détection de la vitesse de rotation.

5. Circuit de commande selon la revendication 4,
caractérisé en ce que
le dispositif de détection de la vitesse de rotation est constitué par un circuit (78, 79, 75; 102, 112, 301, 120), qui mesure la tension induite en tournant d'au moins un enroulement du stator (100, 110) quand il n'est pas parcouru par le courant.

6. Circuit de commande selon la revendication 4,
caractérisé en ce que
le dispositif de détection de la vitesse de rotation est constitué par un convertisseur fréquence/tension qui utilise la fréquence des signaux de détection de la position comme mesure de la vitesse de rotation.

7. Circuit de commande selon la revendication 6,
caractérisé en ce qu'
on utilise une génératrice en dents de scie pour le convertisseur de fréquence/tension, génératrice en dents de scie qui est constituée par la génératrice en triangle qui influence l'instant du branchement d'au moins l'un des flancs de courant (flancs de branchement et/ou de débranchement) des transistors des étages terminaux en comparant à des tensions de référence.

8. Circuit de commande selon l'une des revendications 1 à 7, avec au moins deux enroulements de stator (100, 110), deux étages terminaux (60, 70) et un circuit de détection de la position du rotor (2) qui délivre deux signaux de sortie (5, 6) déphasés l'un par rapport à l'autre de 180°,
caractérisé en ce que
le circuit de détection de la position du rotor (2) est constitué de telle manière que le taux d'impulsions des signaux de sortie s'écarte de 50 %, que les deux signaux de sortie (5, 6) sont ajoutés (206, 208) à un signal de sommation qui présente des vacances d'impulsions et que le signal de sommation actionne la génératrice en triangle (83, 202, 214, 216).

9. Circuit de commande selon l'une des revendications précédentes,
caractérisé en ce que
aussi bien les flancs antérieurs que les flancs postérieurs des impulsions de commande sont fixés en comparant un signal triangulaire ou en dents de scie à des signaux de référence.

10. Circuit de commande selon l'une des revendications précédentes,
caractérisé en ce que
dans la phase de commutation prédéfinie par le circuit de détection (2) de la position du rotor les étages terminaux (60, 70) fonctionnent dans un premier intervalle de temps comme interrupteurs et dans un second interrupteur de temps comme éléments analogiques d'amplificateur, dans lequel on réduit le courant branché auparavant selon une fonction prédéfinie de rampe.

11. Circuit de commande selon la revendication 10,
caractérisé en ce que
le signal en triangle est combiné dans un amplificateur (127) à une tension de référence d'une manière telle et le résultat constitue les impulsions de commande en forme de rampe d'une manière telle qu'une partie des flancs triangulaires forme les flancs tombants des impulsions de commande.

12. Circuit de commande selon la revendication 11,
caractérisé en ce qu'
on compare le signal en triangle dans un comparateur (240) à une tension de référence et on utilise le résultat pour retarder les flancs de montée des impulsions de commande en forme de rampe.

13. Circuit de commande selon l'une des revendications 1 à 8,
caractérisé en ce que
la génératrice en triangle (21) consiste en une génératrice à dents de scie (83) et en un circuit de mise en forme d'impulsions (84, 85) qui prélève à partir d'un signal en dents de scie une tension en triangle, avec un flanc montant et un flanc descendant dont le sommet se trouve à peu près de façon symétrique au milieu entre les deux flancs de la tension en triangle, et se trouve de cette façon aussi au milieu de la phase de commutation.

14. Circuit de commande selon la revendication 13,
caractérisé en ce que
la tension en triangle est amenée à un circuit de valeur de seuil (33, 101) qui ne délivre que les fractions de signaux qui dépassent une tension de référence (35, 105) en tant qu'impulsions de commande en forme de rampes aux étages terminaux (60, 70).

15. Circuit de commande selon la revendication 9, 11, 12 ou 14,
caractérisé en ce que
les tensions de référence (35, 105) sont influencées par la commande de la puissance ou de la vitesse de rotation du moteur.

16. Circuit de commande selon l'une des revendications 1 à 15,
caractérisé en ce que
la vitesse de rotation peut être réglée par un circuit de réglage de la vitesse de rotation (36).

17. Circuit de commande selon l'une des revendications 1 à 15,
caractérisé en ce que
la commande de la puissance ou de la vitesse de rotation du moteur a lieu à partir d'une grandeur physique que l'on peut définir extérieurement au préalable dans une chaîne de commande ouverte.

18. Circuit de commande selon l'une des revendications 1 à 15,
caractérisé en ce que
la commande de la puissance ou de la vitesse de rotation du moteur a lieu à partir d'une grandeur physique que l'on peut définir extérieurement au préalable dans une chaîne de régulation fermée.

19. Circuit de commande selon la revendication 17 ou 18,
caractérisé par
un détecteur de température (51, 20) qui sert à exercer une influence sur la puissance ou la vitesse de rotation du moteur.
